# FASCICULE DE BREVET EUROPEEN

(11) **EP 3 221 177 B1**
(45) Date de publication et mention de la délivrance du brevet: **05.09.2018**
(21) Numéro de dépôt: 15817932.5
(22) Date de dépôt: 16.11.2015
(51) Int. Cl.: B60L 1/00, H02J 1/00

(54) **SYSTÈME D'ALIMENTATION ÉLECTRIQUE D'UN VÉHICULE AUTOMOBILE ET MODULE ÉLECTRONIQUE DE COMMANDE CORRESPONDANT**
STROMVERSORGUNGSSYSTEM EINES KRAFTFAHRZEUGS UND ENTSPRECHENDES ELEKTRONISCHES STEUERMODUL
MOTOR VEHICLE ELECTRICAL SUPPLY SYSTEM AND CORRESPONDING ELECTRONIC CONTROL MODULE

(30) Priorité: 18.11.2014 FR 1461094
(43) Date de publication de la demande: 27.09.2017
(73) Titulaire: Valeo Equipements Electriques Moteur, 94046 Créteil Cedex (FR)
(72) Inventeur: CHASSARD, Pierre, 94000 Creteil (FR)
(74) Mandataire: Duprez, Richard
(86) Numéro de dépôt international: PCT/FR2015/053076
(87) Numéro de publication internationale: WO 2016/079401

(56) Documents cités:
- EP-A2- 2 574 494
- WO-A1-2012/047118
- US-A- 5 406 091
- US-A1- 2013 235 631

## Description

### DOMAINE TECHNIQUE DE L'INVENTION.

La présente invention concerne un système d'alimentation électrique d'un véhicule automobile, ainsi qu'un module électronique de commande contrôlant ce système.

### ARRIERE PLAN TECHNOLOGIQUE DE L'INVENTION.

Les véhicules automobiles à moteur thermique comportent classiquement un réseau électrique de bord comprenant une batterie, généralement de 12 V, destiné à alimenter en énergie électrique les divers équipements, notamment un démarreur, indispensable pour assurer le démarrage du moteur thermique. Après le démarrage, un alternateur accouplé au moteur thermique assure la charge de la batterie avec un redresseur. Les documents US-A-5 406 091 et EP-A-2 574 494 divulguent l'état de la technique relatif à l'arrière plan technologique de l'invention. De nos jours, le développement de l'électronique de puissance permet de concevoir un onduleur/ redresseur alimentant et pilotant une seule machine électrique tournante polyphasée réversible qui remplace avantageusement le démarreur et l'alternateur.

Dans un premier temps, cette machine, connue sous le nom d'alterno-démarreur, avait essentiellement pour but de remplir les fonctions de générateur et de moteur électrique autrefois dédiées à l'alternateur et au démarreur, et, accessoirement, de récupérer l'énergie au freinage, ou d'apporter un supplément de puissance et de couple au moteur thermique.

Dans le but d'accroître la puissance et d'améliorer le rendement de l'alterno-démarreur en augmentant sa tension de fonctionnement tout en conservant la possibilité d'utiliser des autres équipements standards, prévus pour une alimentation de 12 V à 14 V, notamment les batteries au plomb, a été développée une architecture dite "14 + X", ou "micro-hybride", décrite par exemple dans la demande de brevet FR2838576 de la société VALEO EQUIPEMENT ELECTRIQUES MOTEUR.

Cette architecture consiste donc en un réseau électrique de puissance reliant l'alterno-démarreur à un élément de stockage d'énergie électrique fonctionnant à une tension supérieure à 14 V, pouvant atteindre 48 V, et en un réseau électrique de service reliant tous les autres équipements. L'adaptation des niveaux de tensions entre les deux réseaux est assurée par un convertisseur continu/ continu réversible.

Dans un second temps, des considérations écologiques, ont conduit à concevoir des machines réversibles ayant une puissance, de l'ordre de 8 à 16 KW, suffisante pour entraîner le véhicule à faible vitesse, par exemple en environnement urbain.

De telles puissances n'ont pu être obtenues tout en conservant des machines électriques compactes qu'en portant la tension du réseau électrique de puissance à une tension, de l'ordre de 60 V, bien supérieure à la tension nominale des batteries au plomb classiques, dans un système décrit notamment dans la demande brevet FR2988926 également de la société VALEO EQUIPEMENT ELECTRIQUES MOTEUR.

Par ailleurs, des réseaux de puissance à des tensions allant jusqu'à 120 V peuvent être mis en oeuvre dans une architecture qui permet au véhicule d'être entraîné à pleine vitesse par le moteur électrique (architecture dite "full-hybrid" en terminologie anglaise, par comparaison à l'architecture précédente dite "mild-hybrid").

Dans un tel système d'alimentation électrique existe le besoin d'échanger des informations entre les deux réseaux.

Une unité électronique de commande est nécessaire pour contrôler le redresseur/ onduleur à la tension du réseau électrique de puissance à partir d'informations provenant d'équipements à la tension du réseau de service, notamment de l'unité de contrôle du moteur thermique dans l'architecture "mild hybrid". Inversement, des informations sur le générateur/ démarreur doivent être transmises aux équipements de l'habitacle.

Dans un tel système d'alimentation électrique, il est nécessaire de garantir qu'à aucun moment une connexion utilisée pour un échange d'informations ne puisse pas servir à échanger un courant de puissance.

### DESCRIPTION GENERALE DE L'INVENTION.

La présente invention concerne un système d'alimentation électrique d'un véhicule automobile satisfaisant aux contraintes exposées ci-dessus.

Ce système d'alimentation électrique est du type de ceux connus en soi comportant:
- un réseau électrique de puissance présentant une première tension nominale reliant électriquement des premiers équipements comprenant un moteur/ générateur électrique, un onduleur/ redresseur et un premier stockeur d'énergie électrique;
- un réseau électrique de service présentant une seconde tension nominale inférieure à la première tension nominale reliant électriquement des seconds équipements comprenant un second stockeur d'énergie électrique.

Dans ce type de système d'alimentation électrique, une unité électronique de commande contrôle de manière connue en soi des transferts d'énergie entre le réseau de puissance et le réseau de service au moyen d'un convertisseur continu/ continu réversible.

L'unité électronique de commande comporte un premier module électronique alimenté par le réseau de puissance échangeant des informations avec les premiers équipements, et un second module électronique alimenté par le réseau de service échangeant ces informations avec les seconds équipements et isolé électriquement du premier module.

Dans le système d'alimentation électrique selon l'invention, le premier module et le second module échangent ces informations sur un canal de communication isolé électriquement.

Selon un mode de réalisation particulier de l'invention, ce canal de communication est bidirectionnel.

Selon un autre mode de réalisation particulier de l'invention, ce canal de communication est un canal de communication optique.

L'invention vise plus particulièrement un système d'alimentation électrique d'un véhicule automobile dans lequel la première tension nominale vaut sensiblement 48 V et la seconde tension nominale vaut sensiblement 12 V.

L'invention concerne également une unité électronique de commande apte à être intégrée dans un système d'alimentation électrique tel que décrit ci-dessus.

Selon une caractéristique de l'invention, cette unité électronique de commande comporte un premier module électronique destiné à être alimenté sous une première tension nominale formé sur un premier substrat plan et un second module électronique destiné à être alimenté sous une seconde tension nominale inférieure à cette première tension nominale formé sur un second substrat plan isolé électriquement du premier substrat.

Dans l'unité électronique de commande selon l'invention, le premier substrat est agencé en vis-à-vis parallèlement au second substrat et séparé par une couche intermédiaire formée d'un matériau isolant électriquement.

Dans un premier mode de réalisation de l'unité électronique de commande selon l'invention, au moins une première diode électroluminescente et au moins un premier photorécepteur sont rapportés sur le premier substrat en regard d'ouvertures dans cette couche intermédiaire correspondant respectivement à au moins un second photorécepteur et à au moins une seconde diode électroluminescente rapportés sur le second substrat.

Alternativement, dans un second mode de réalisation de l'unité électronique de commande selon l'invention, au moins une première diode électroluminescente et au moins un premier photorécepteur sont intégrés dans le premier substrat en regard d'ouvertures dans cette couche intermédiaire correspondant respectivement à au moins un second photorécepteur et à au moins une seconde diode électroluminescente intégrés dans le second substrat.

Ces quelques spécifications essentielles auront rendu évidents pour l'homme de métier les avantages apportés par le système d'alimentation électrique d'un véhicule automobile selon l'invention par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

### BREVE DESCRIPTION DES DESSINS.

La **Figure 1** est un schéma électrique d'un système d'alimentation électrique d'un véhicule automobile selon l'invention.
Les **Figures 2a et 2b** illustrent respectivement des premier et second modes de réalisation d'une unité électronique de commande du système d'alimentation électrique d'un véhicule automobile selon l'invention montré sur la **Figure 1****.**

### DESCRIPTION DES MODES DE REALISATION PREFERES DE L'INVENTION.

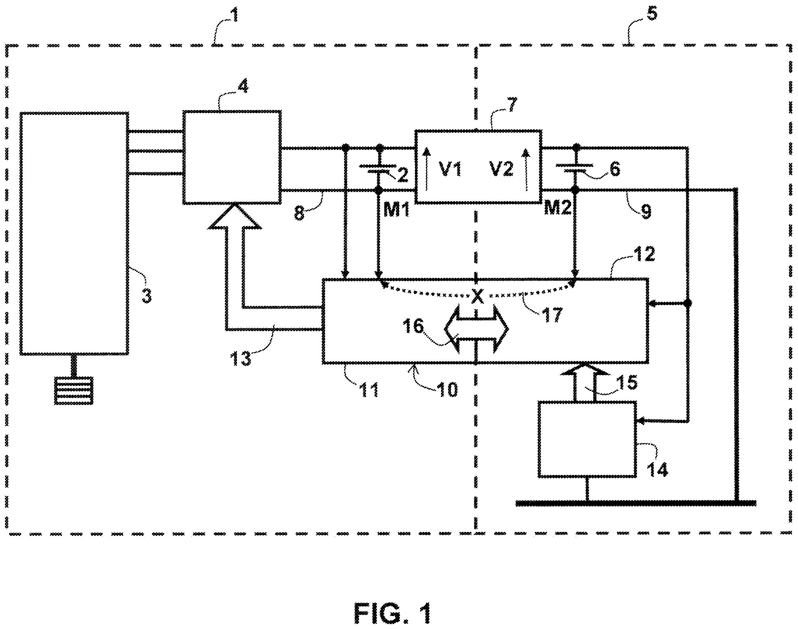

Un rappel, en liaison avec la **Figure 1****,** des caractéristiques d'un système d'alimentation électrique d'un véhicule automobile connu de l'état de la technique dans une architecture dite "mild-hybrid", permettra de bien comprendre l'apport de l'invention.

La **Figure 1** montre schématiquement un réseau électrique de puissance 1 comprenant un premier stockeur d'énergie électrique 2 et un moteur/ générateur électrique 3.

Le plus souvent, ce moteur/ générateur 3 est une machine triphasée comprenant un rotor comportant un bobinage d'excitation et un stator comportant des enroulements de phases.

Quand le moteur/ générateur 3 est en mode moteur, un circuit d'excitation fournit un courant d'excitation au rotor et un convertisseur continu/ alternatif 4 fonctionnant en onduleur alimente les enroulements de phases du stator à partir du premier stockeur d'énergie électrique 2.

Quand le moteur/ générateur 3 est en mode générateur, le convertisseur continu/ alternatif 4 fonctionne en redresseur synchrone et le circuit d'excitation contrôle la tension de charge du premier stockeur d'énergie électrique 2.

La **Figure 1** montre également schématiquement un réseau électrique de service 5 comprenant un second stockeur d'énergie électrique 6.

De manière générale, le premier stockeur d'énergie électrique 2 peut être une batterie lithium-ion de forte capacité et d'une première tension nominale V1 élevée, généralement 48 V ou 60 V, et le second stockeur 6 peut être une batterie au plomb standard présentant une seconde tension nominale V2 de 12 V.

Comme le montre bien la **Figure 1****,** le réseau électrique de puissance 1 et le réseau électrique de service 5 sont reliés entre eux par un convertisseur continu/ continu réversible 7 qui assure l'adaptation des niveaux de tensions V1, V2 et les transferts d'énergie électrique entre les deux réseaux électriques 1, 5.

Ce convertisseur 7 peut être un convertisseur à semi-conducteurs à découpage monté en "masse commune" avec les deux batteries 2, 6, c'est-à-dire que les deux réseaux électriques 1, 5 ont la même masse, ou bien, un convertisseur à « masses isolées » avec le réseau de puissance 1 étant alors relié à une première masse 8 et le réseau de service 5 étant relié à une seconde masse 9, isolée électriquement de la première masse 8.

Une unité électronique de commande 10 qui contrôle les transferts d'énergie entre le réseau de puissance 1 et le réseau de service 5 comporte un premier module électronique 11 qui est alimenté par le réseau de puissance 1 et un second module électronique 12 qui est alimenté par le réseau électrique de service 5.

Le premier module 11 transmet notamment des commandes 13 au redresseur/ onduleur 4 en provenance d'une unité de contrôle 14 du moteur thermique.

Les commandes 15 issues de l'unité de contrôle moteur 14 sont reçues par le second module électronique 12 et transmises au premier module électronique 11 sur un canal de communication 16 isolé électriquement pour éviter un passage de courant 17 entre les deux modules 11, 12.

Un canal de communication 16 optique est utilisé afin de garantir une tension d'isolement importante, de l'ordre de plusieurs kilovolts.

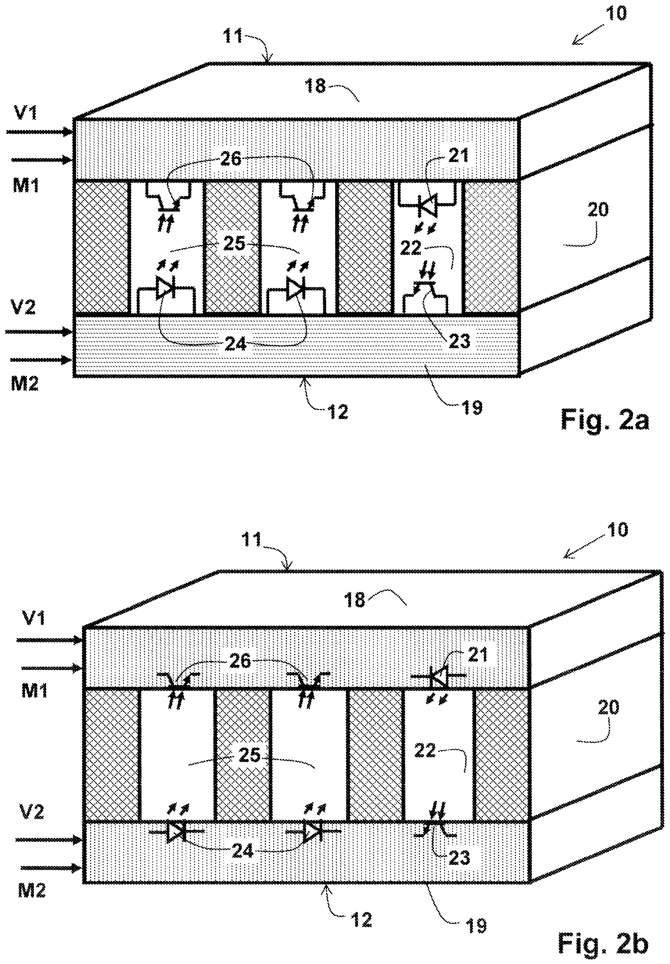

La **Figure 2a** montre un premier mode de réalisation préféré de l'unité électronique de commande 10 implémentant ce canal de communication 16 optique, en utilisant l'intégration en volume des technologies modernes en microélectronique.

Le premier module électronique 11 est formé sur un premier substrat 18 plan qui s'étend en vis-à-vis parallèlement à un second substrat 19 plan sur lequel est formé le second module électronique 12.

Les premier et second substrats 18, 19 sont séparés par une couche intermédiaire 20 en matériau électriquement isolant.

Comme le montre bien la **Figure 2a****,** une diode électroluminescente 21 est rapportée sur le premier substrat 18 en regard d'une ouverture 22 dans la couche intermédiaire 20 de manière à transmettre un flux lumineux modulé à un photorécepteur 23 rapporté sur le second substrat 19 au niveau de cette ouverture 22.

Inversement, afin d'assurer une communication bidirectionnelle, deux autres diodes électroluminescentes 24 sont rapportées sur le second substrat 19 en regard de deux autres ouvertures 25 dans la couche intermédiaire 20 de manière à transmettre deux autres flux lumineux modulés à deux autres photorécepteurs 26 rapportés sur le premier substrat 18 au niveau de ces autres ouvertures 25.

La **Figure 2b** montre un second mode de réalisation préféré de l'unité électronique de commande 10 implémentant ce canal de communication 16 optique, dans lequel les diodes électroluminescentes 21, 24 et les photorécepteurs 23, 26 sont intégrés dans les substrats 18, 19 eux-mêmes.

Réalisée de la sorte l'unité électronique de commande 10, est apte à être alimentée à la fois à la première tension nominale V1 du réseau de puissance 1 et à la seconde tension nominale V2 du réseau de service pour assurer l'échange d'informations entre les équipements connectés à ces deux réseaux 1,5, sans possibilité de passage de courant 17 via l'unité 10.

Comme il va de soi l'invention ne se limite pas aux seuls modes d'exécution préférentiels décrits ci-dessus.

Une description analogue pourrait porter sur des moyens d'isolation galvanique entre les premier et second modules électroniques 11, 12 de l'unité électronique de commande 10 différents des opto-coupleurs formés par les couples diodes électroluminescentes 21, 24/ photorécepteurs 23, 26 décrits, par exemple sur des dispositifs à couplage capacitif ou inductif, tels que des transformateurs d'isolement.

Le nombre indiqué d'opto-coupleurs 21, 24; 23, 26 représentés n'est aussi donné qu'à titre d'exemple. L'homme de métier adaptera ce nombre en fonction de la capacité requise du canal de communication 16 optique.

Le premier stockeur d'énergie électrique 2 peut être, alternativement à une batterie lithium-ion d'une première tension nominale V1 de 48 V, une batterie lithium-ion de 60 V, ou une batterie à haute température à sels fondus de type "Zébra" (Sodium/ chlorure de nickel), ou bien, si le niveau d'énergie requis est faible, une ultra-capacité de type EDLC (acronyme anglais pour "Electric Double Layer Capacitor" c'est-à-dire "capacité électrique à double couche").

De même, le type de second stockeur d'énergie électrique 6 peut être alternativement à une batterie au plomb standard, une batterie nickel-zinc ou une batterie NiMH, par exemple.

Le moteur/ générateur 3 est aussi, alternativement à une machine polyphasée à excitation, une machine à aimants permanents, voire une machine hybride.

L'invention embrasse donc toutes les variantes possibles de réalisation adaptées aux caractéristiques des équipements connectés au réseau de puissance 1 et au réseau de service 5 dans la mesure où ces variantes restent dans le cadre défini par les revendications ci-après.

## Revendications

1. Système d'alimentation électrique d'un véhicule automobile du type de ceux comportant, d'une part, un réseau électrique de puissance (1) présentant une première tension nominale (V1) reliant électriquement des premiers équipements comprenant un moteur/ générateur électrique (3), un onduleur/ redresseur (4) et un premier stockeur d'énergie électrique (2), et, d'autre part, un réseau électrique de service (5) présentant une seconde tension nominale (V2) inférieure à ladite première tension nominale (V1) reliant électriquement des seconds équipements comprenant un second stockeur d'énergie électrique (6), une unité électronique de commande (10) contrôlant des transferts d'énergie entre ledit réseau de puissance (1) et ledit réseau de service (5) au moyen d'un convertisseur continu/ continu réversible (7), ladite unité électronique de commande (10) comportant un premier module électronique (11) alimenté par ledit réseau de puissance (1) échangeant des informations (13) avec lesdits premiers équipements, et un second module électronique (12) alimenté par ledit réseau de service (5) échangeant lesdites informations (15) avec lesdits seconds équipements et isolé électriquement dudit premier module (11), **caractérisé en ce que** ledit premier module électronique (11) est destiné à être alimenté sous une première tension nominale (V1) et est formé sur un premier substrat plan (18) et ledit second module électronique (12) est destiné à être alimenté sous une seconde tension nominale (V2) inférieure à ladite première tension nominale (V1) et est formé sur un second substrat (19) plan isolé électriquement dudit premier substrat (18), ledit premier substrat (18) étant agencé en vis-à-vis parallèlement audit second substrat (19) et séparé par une couche intermédiaire (20) formée d'un matériau isolant électriquement.

2. Système d'alimentation électrique d'un véhicule automobile selon la revendication 1 précédente, **caractérisé en ce que** ledit premier module (11) et ledit second module (12) échangent lesdites informations (13, 15) sur un canal de communication (16) isolé électriquement.

3. Système d'alimentation électrique d'un véhicule automobile selon la revendication 2 précédente, **caractérisé en ce que** ledit canal de communication (16) est bidirectionnel.

4. Système d'alimentation électrique d'un véhicule automobile selon la revendication 2 ou 3 précédente, **caractérisé en ce que** ledit canal de communication (16) est un canal de communication optique.

5. Système d'alimentation électrique d'un véhicule automobile selon l'une quelconque des revendications 1 à 4 précédentes, **caractérisé en ce que** ladite première tension nominale (V1) vaut sensiblement 48 V et ladite seconde tension nominale (V2) vaut sensiblement 12 V.

6. Système d'alimentation électrique d'un véhicule automobile selon l'une quelconque des revendications 1 à 5 précédentes, **caractérisé en ce qu'**au moins une première diode électroluminescente (21) et au moins un premier photorécepteur (26) sont rapportés sur ledit premier substrat (18) en regard d'ouvertures (22, 25) dans ladite couche intermédiaire (20) correspondant respectivement à au moins un second photorécepteur (23) et à au moins une seconde diode électroluminescente (24) rapportés sur ledit second substrat (19).

7. Système d'alimentation électrique d'un véhicule automobile selon l'une quelconque des revendications 1 à 5 précédentes, **caractérisé en ce qu'**au moins une première diode électroluminescente (21) et au moins un premier photorécepteur (26) sont intégrés dans ledit premier substrat (18) en regard d'ouvertures (22, 25) dans ladite couche intermédiaire (20) correspondant respectivement à au moins un second photorécepteur (23) et à au moins une seconde diode électroluminescente (24) intégrés dans ledit second substrat (19).

## Patentansprüche

1. Stromversorgungssystem eines Kraftfahrzeugs vom Typ derjenigen, die einerseits ein elektrisches Leistungsnetz (1) umfassen, das eine erste Nennspannung (V1) aufweist und erste Einrichtungen elektrisch verbindet, die einen elektrischen Motor/Generator (3), einen Wechselrichter/Gleichrichter (4) und einen ersten elektrischen Energiespeicher (2) umfassen, und andererseits ein elektrisches Betriebsnetz (5), das eine zweite Nennspannung (V2) aufweist, die niedriger als die erste Nennspannung (V1) ist, und zweite Einrichtungen elektrisch verbindet, die einen zweiten elektrischen Energiespeicher (6) und eine elektronische Steuereinheit (10), welche Energieübertragungen zwischen dem Leistungsnetz (1) und dem Betriebsnetz (5) mittels eines reversiblen Gleichspannungswandlers (7) steuert, umfassen, wobei die elektronische Steuereinheit (10) ein von dem Leistungsnetz (1) gespeistes erstes Elektronikmodul (11), das Informationen (13) mit den ersten Einrichtungen austauscht, und ein von dem Betriebsnetz (5) gespeistes zweites Elektronikmodul (12), das die Informationen (15) mit den zweiten Einrichtungen austauscht und von dem ersten Modul (11) elektrisch isoliert ist, umfasst, **dadurch gekennzeichnet, dass** das erste Elektronikmodul (11) dazu bestimmt ist, mit einer ersten Nennspannung (V1) versorgt zu werden, und auf einem ersten ebenen Substrat (18) ausgebildet ist, und das zweite Elektronikmodul (12) dazu bestimmt ist, mit einer zweiten Nennspannung (V2) versorgt zu werden, die niedriger als die erste Nennspannung (V1) ist, und auf einem zweiten ebenen Substrat (19) ausgebildet ist, das von dem ersten Substrat (18) elektrisch isoliert ist, wobei das erste Substrat (18) gegenüber dem zweiten Substrat (19) und parallel zu diesem angeordnet ist und durch eine Zwischenschicht (20) getrennt ist, die aus einem elektrisch isolierenden Material ausgebildet ist.

2. Stromversorgungssystem eines Kraftfahrzeugs nach dem vorhergehenden Anspruch 1, **dadurch gekennzeichnet, dass** das erste Modul (11) und das zweite Modul (12) die Informationen (13, 15) auf einem elektrisch isolierten Kommunikationskanal (16) austauschen.

3. Stromversorgungssystem eines Kraftfahrzeugs nach dem vorhergehenden Anspruch 2, **dadurch gekennzeichnet, dass** der Kommunikationskanal (16) bidirektional ist.

4. Stromversorgungssystem eines Kraftfahrzeugs nach dem vorhergehenden Anspruch 2 oder 3, **dadurch gekennzeichnet, dass** der Kommunikationskanal (16) ein optischer Kommunikationskanal ist.

5. Stromversorgungssystem eines Kraftfahrzeugs nach einem der vorhergehenden Ansprüche 1 bis 4, **dadurch gekennzeichnet, dass** die erste Nennspannung (V1) im Wesentlichen 48 V beträgt und die zweite Nennspannung (V2) im Wesentlichen 12 V beträgt.

6. Stromversorgungssystem eines Kraftfahrzeugs nach einem der vorhergehenden Ansprüche 1 bis 5, **dadurch gekennzeichnet, dass** wenigstens eine erste Leuchtdiode (21) und wenigstens ein erster Fotoempfänger (26) an das erste Substrat (18) gegenüber von Öffnungen (22, 25) in der Zwischenschicht (20) angefügt sind, welche wenigstens einem zweiten Fotoempfänger (23) bzw. wenigstens einer zweiten Leuchtdiode (24) entsprechen, die an das zweite Substrat (19) angefügt sind.

7. Stromversorgungssystem eines Kraftfahrzeugs nach einem der vorhergehenden Ansprüche 1 bis 5, **dadurch gekennzeichnet, dass** wenigstens eine erste Leuchtdiode (21) und wenigstens ein erster Fotoempfänger (26) in das erste Substrat (18) gegenüber von Öffnungen (22, 25) in der Zwischenschicht (20) integriert sind, welche wenigstens einem zweiten Fotoempfänger (23) bzw. wenigstens einer zweiten Leuchtdiode (24) entsprechen, die in das zweite Substrat (19) integriert sind.

## Claims

1. Electric power supply system for a motor vehicle of the type including firstly an electric power network (1) having a first nominal voltage (V1) electrically linking first devices comprising an electric motor/generator (3), an inverter/rectifier (4) and a first electrical energy store (2) and secondly an electrical service network (5) having a second nominal voltage (V2) lower than said first nominal voltage (V1) and electrically linking second devices comprising a second electrical energy store (6), an electronic control unit (10) controlling transfers of energy between said power network (1) and said service network (5) by way of a reversible DC-to-DC converter (7), said electronic control unit (10) including a first electronic module (11) supplied with power by said power network (1) and exchanging information (13) with said first devices, and a second electronic module (12) supplied with power by said service network (5) and exchanging said information (15) with said second devices and isolated electrically from said first module (11), **characterized in that** said first electronic module (11) is intended to be supplied with power at a first nominal voltage (V1) and is formed on a first planar substrate (18) and said second electronic module (12) is intended to be supplied with power at a second nominal voltage (V2) lower than said first nominal voltage (V1) and is formed on a second planar substrate (19) isolated electrically from said first substrate (18), said first substrate (18) being arranged opposite and parallel to said second substrate (19) and separated by an intermediate layer (20) formed of an electrically insulating material.

2. Electric power supply system for a motor vehicle according to preceding Claim 1, **characterized in that** said first module (11) and said second module (12) exchange said information (13, 15) over an electrically isolated communication channel (16).

3. Electric power supply system for a motor vehicle according to preceding Claim 2, **characterized in that** said communication channel (16) is bidirectional.

4. Electric power supply system for a motor vehicle according to preceding Claim 2 or 3, **characterized in that** said communication channel (16) is an optical communication channel.

5. Electric power supply system for a motor vehicle according to any one of preceding Claims 1 to 4, **characterized in that** said first nominal voltage (V1) has a value of substantially 48 V and said second nominal voltage (V2) has a value of substantially 12 V.

6. Electric power supply system for a motor vehicle according to any one of preceding Claims 1 to 5, **characterized in that** at least one first light-emitting diode (21) and at least one first photoreceptor (26) are added to said first substrate (18) facing apertures (22, 25) in said intermediate layer (20) corresponding to at least one second photoreceptor (23) and to at least one second light-emitting diode (24) that are added to said second substrate (19), respectively.

7. Electric power supply system for a motor vehicle according to any one of preceding Claims 1 to 5, **characterized in that** at least one first light-emitting diode (21) and at least one first photoreceptor (26) are integrated into said first substrate (18) facing apertures (22, 25) in said intermediate layer (20) corresponding to at least one second photoreceptor (23) and to at least one second light-emitting diode (24) that are integrated into said second substrate (19), respectively.
